# EUROPÄISCHE PATENTANMELDUNG

(11) **EP 2 570 258 A1**
(43) Veröffentlichungstag der Anmeldung: **20.03.2013**
(21) Anmeldenummer: 12183202.6
(22) Anmeldetag: 05.09.2012
(51) Int. Cl.: B32B 15/14, B32B 15/08, B32B 27/12, B32B 15/20, B32B 17/04

(54) **Grenzflächenschicht aus thermoplastischem Elastomer in Faser-Metall-Laminaten**

(30) Priorität: 14.09.2011 DE 102011082697
(71) Anmelder: Deutsches Zentrum für Luft- und Raumfahrt e.V., 51147 Köln (DE)
(72) Erfinder: Schulze, Karola, 53859 Niederkassel (DE); Hausmann, Joachim, 50670 Köln (DE); Schmitz, Dominic, 53783 Eitorf (DE)
(74) Vertreter: von Kreisler Selting Werner

(57) **Zusammenfassung**

Die vorliegende Erfindung betrifft ein Laminat (4) umfassend wenigstens eine zwischen mindestens zwei metallischen Schichten (1) angeordnete verstärkte Kunststoffschicht (2) und wenigstens eine zwischen der metallischen Schicht (1) und der Kunststoffschicht (2) angeordnete Grenzflächenschicht (3) sowie Verfahren zu dessen Herstellung.

## Beschreibung

Die vorliegende Erfindung betrifft ein Faser-Metall-Laminat, welches Grenzflächenschichten aus mehrphasigen Polymerblends, umfassend thermoplastische Elastomere (TPE) oder kautschukmodifizierte Thermoplasten, oder aus silanmodifizierten Thermoplast/Polymerblends aufweist.

Faser-Metall-Laminate sind aus dem Stand der Technik bekannt. Sie bestehen aus wechselweise geschichteten Metallfolien und Faserverbundkunststoffschichten (FVK-Schichten). In monolithischen Metallen können durch wiederholte Belastungen (Ermüdung) Risse entstehen. Der wesentliche Vorteil von Faser-Metall-Laminaten ist, dass das Risswachstum aufgrund der rissüberbrückenden Wirkung durch die Fasern erheblich verlangsamt wird. Die Phase der Rissinitiierung durch Ermüdungsbelastung ist in Faser-Metall-Laminaten mit der von monolithischen Metallen vergleichbar. Ein einmal initiierter Riss wächst in Faser-Metall-Laminaten jedoch bis zu 50 Mal langsamer als in unverstärkten Metallen (R.C. Alderleisten, On the available relevant approaches for fatigue crack propagation prediction in Glare, International Journal of Fatigue, 29 (2007) 289-304).

Ein bekanntes Beispiel für ein Faser-Metall-Laminat ist glasfaserverstärktes Aluminium, welches unter dem Namen "Glare" bekannt ist. Es handelt sich hierbei um einen Verbundwerkstoff, der aus Schichten aus Aluminium und einem glasfaserverstärkten Kunststoff aufgebaut ist. Der zwischen den Aluminiumschichten eingebrachte glasfaserverstärkte Kunststoff besteht aus einem Duromer. Faser-Metall-Laminate mit faserverstärkten Thermoplastlagen weisen gegenüber Faser-Metall-Laminaten auf Basis duromerer Matrixsysteme erhebliche Vorteile auf.

Die Herstellung von Faser-Metall-Laminaten mit thermoplastischen Matrixsystemen erfolgt rein thermisch ohne aushärtende Systeme (Harz, Härter, Lösemittel). Dementsprechend sind die Rohstoffe ohne Kühlanforderungen unbegrenzt lagerfähig, und bei der Laminatherstellung finden darüber hinaus keine lang andauernden Aushärtungsprozesse unter Bildung schädlicher Reaktionsprodukte statt. Thermoplastische Laminate werden mittels autoklavloser Heißpresstechnik oder Vakuumtechnik mit sehr kurzen Zykluszeiten hergestellt. Die wechselweise geschichteten Einzelschichten (Metall, faserverstärkter Kunststoff) werden unter Druck aufgeschmolzen (Prozesstemperatur = 20°C bis 40°C oberhalb der Konsolidierungstemperatur (Schmelztemperatur) des Thermoplasten) und unter Druck abgekühlt. In der Abkühlphase gehen Thermoplast und Metall eine feste Verbindung miteinander ein (Prinzip des Heißklebens). Die kontinuierliche Herstellung von großflächigen Laminathalbzeugen mit Hilfe einer Doppelbandpresse bietet sehr großes Potenzial zur großserientauglichen Herstellung.

Aufgrund der Schmelzbarkeit thermoplastischer Faserverbundkunststoffe ergeben sich für Faser-Metall-Laminate eine Reihe verschiedener Weiterverarbeitungsmöglicheiten ohne Zusatzstoffe. Aus Halbzeugen können beispielsweise im Tiefzieh- und Umformprozess schnell und kostengünstig fertige Bauteile hergestellt werden. Durch die Schweißbarkeit des Werkstoffsystems wird die Fügung von Bauteilen untereinander sowie die Reparatur und Wartung erheblich vereinfacht. Materialfehler, wie beispielsweise Delaminationen an Grenzflächen (Metall/FVK, Faser/Thermoplast) können durch partielles druckbeaufschlagtes Aufschmelzen beseitigt werden. Der Austausch von ganzen Bauteilen beziehungsweise Bauteilmodulen ist nicht mehr in allen Fällen zwingend erforderlich.

Im Vergleich zu Faserverbundmaterialien mit duromeren Matrixsystemen können thermoplastische Faserverbundwerkstoffe aufgrund der Schmelzbarkeit leichter recycelt werden. Die thermoplastischen Faserverbundschichten der Faser-Metall-Laminate werden beispielsweise thermisch abgelöst, granuliert und als Spritzgieß - oder Extrudiermasse eingesetzt. So werden Metall- und Verbundwerkstoffanteil dem Materialkreislauf wieder zurückgeführt. Durch vereinfachte Reparaturmöglichkeiten thermoplastischer Faser-Metall-Laminate und die Möglichkeit des Recycelns thermoplastischer Faserverbundmaterialien lassen sich Materialressourcen einsparen.

Der Vorteil entsprechender Verbundwerkstoffe gegenüber den reinen Metallen liegt beispielsweise in einem besseren Durchbrand- sowie Einschlagverhalten (Asundi, A. and A.Y.N. Choi, Fiber metal laminate: An advanced material for future aircraft, Journal of Materials Processing Technology, 63 (1997) 384-394). Zudem wird die Korrosionsbeständigkeit verbessert. Fängt eine metallische Schicht des Laminats an zu korrodieren, so wird das Fortschreiten der Korrosion in Richtung der nächsten metallischen Schicht durch die Faserschicht aufgehalten (T. Sinmazcelik et al., A review: Fibre metal laminates, background, bonding types and applied test methods, Materials and Design 32 (2011) 3671-3685). Nachteilig ist jedoch meist der reduzierte Elastizitätsmodul.

Ein Verbundmaterial umfassend ein Faser-Metall-Laminat ist aus DE 10 2007 036 510 B3 und WO 00/56541 A1 bekannt. Die Metallschichten dienen der Verstärkung des Faserverbundes in Verbindungsbereichen.

Ein Verbundmaterial aus einem Leichtmetall und mit Kohlenstofffasern verstärktem Kunststoff ist aus US 6 468 613 B1 bekannt. Das faserverstärkte Kunststoffmaterial wird mittels einer Haftvermittlerschicht auf die Oberfläche eines Leichtmetallmaterialsaufgeklebt.

Ein Leichtbauverbundmaterial mit einem Schichtaufbau aus
a) Trägerschicht oder Trägerstruktur aus Metall oder faserverstärktem Kunstharz,
b) Haftvermittlerschicht aus Elastomer und
c) Deckschicht aus Kohlenstofffaser oder kohlenstoffmischfaserverstärktem Kunststoff ist in WO 2010/083980 A1 beschrieben. Die Haftvermittlerschicht verklebt die Deckschicht mit der Trägerschicht und dämpft Spannungen in Richtung der Trägerschicht. Die Deckschicht aus faserverstärktem Kunststoff soll eine Trägerschicht mit geringer Dicke ermöglichen sowie eine dekorative Außenschicht bilden. Aus Designzwecken kann es gewünscht sein, dass die Struktur des faserverstärkten Kunststoffmaterials optisch in Erscheinung tritt.

>

Ein Material mit einer mittleren Kleberschicht ist auch aus JP 000057150567 A bekannt. Eine Kupferfolie wird mittels einer Haftvermittlerschicht aus einem silanmodifizierten Thermoplast/Polymerblend auf einem Substrat fixiert.

Aus DE 10 2010 037 817 A1 ist ein Material bekannt, das aus einer äußeren Faserverbundkunststoffschicht, einer mittleren Kunststoffschicht sowie einer äußeren Metallschicht besteht. Die faserverstärkte Kunststoffschicht stellt das Lastaufnahmevermögen des Materials zur Verfügung. Die mittlere Kunststoffschicht dämpft Spannungsspitzen in Richtung der faserverstärkten Kunststoffschicht. Geschützt wird das Bauteil durch die äußere Metallschicht, die gleichzeitig als Indikator für eine Überbelastung des Bauteils dient.

Bei der Herstellung von thermoplastischen Faser-Metall-Laminaten sind hohe Prozesstemperaturen von 20-40°C oberhalb der Konsolidierungstemperatur des faserverstärkten Kunststoffes notwendig. Stark unterschiedliche Wärmeausdehnungskoeffizienten der Einzelmaterialen (Fasern, Kunststoff, Metall) führen bei der Herstellung von thermoplastischen Faser-Metall-Laminaten zu thermischen Eigenspannungen. Diese sind besonders an den Grenzflächen zwischen Metall und faserverstärktem Kunststoff präsent und wirken sich negativ auf das mechanische Werkstoffverhalten, die Alterungsbeständigkeit - besonders in feuchter Umgebung - und die Ermüdungsfestigkeit aus. Weiterhin muss bei der Montage besonders darauf geachtet werden, dass sich die einzelnen Schichten nicht voneinander lösen.

Zur Reduzierung thermischer Eigenspannung werden Methoden, wie beispielsweise die thermische Nachbehandlung vorgeschlagen (Lebrun, G. and J. Denault, Effect of annealing on the thermal expansion and residual stresses of bidirectional thermoplastic composite laminates, Composites Part A: Applied Science and Manufacturing, 41 (2010) 101-107). Hierdurch wird die Eigenspannung jedoch nur geringfügig verringert. Zudem sind solche Verfahren meist zeitaufwendig und teuer und somit unwirtschaftlich.

Bei bestimmten Kombinationen von Metallen und Verstärkungsfasern besteht aufgrund der stark unterschiedlichen elektrochemischen Potenziale die Gefahr von Kontakt-Korrosion (W. X. Wang et al., Galvanic corrosion-resistant carbon fiber metal laminates, 16. International Conference on composite materials, Japan, 2007). Im Prozessschritt der Weiterverarbeitung beziehungsweise Umformung steigt die Wahrscheinlichkeit der Kontaktkorrosion mit steigendem Maß an Umformgraden. Somit sind Umformprozesse stark eingeschränkt.

Aufgabe der vorliegenden Anmeldung ist die Bereitstellung eines Verbundwerkstoffes, welcher die Vorteile von Faser-Metall- Laminaten, wie beispielsweise verbesserte Riss- und Korrosionseigenschaften aufweist. Damit verbundene Nachteile aus dem Stand der Technik sollen vermieden werden.

Die der vorliegenden Erfindung zu Grunde liegende Aufgabe wird gelöst durch ein Laminat umfassend wenigstens eine zwischen mindestens zwei metallischen Schichten angeordnete faserverstärkte Kunststoffschicht und wenigstens eine zwischen der metallischen Schicht und der Kunststoffschicht angeordnete Grenzflächenschicht aus mehrphasigen Polymerblends oder silanmodifizierten Thermoplast/Polymerblends. Mehrphasiges Polymerblend im Sinne der vorliegenden Erfindung umfasst sowohl ein thermoplastisches Elastomer (TPE) als auch einen kautschukmodifizierten Thermoplast. Ein erfindungsgemäßes Laminat weist somit gegenüber dem Stand der Technik eine Grenzflächenschicht als zusätzliche Schicht zwischen metallischer Schicht und faserverstärkter Kunststoffschicht auf.

TPE (Thermoplastische Elastomere) bestehen aus thermoplastischen und elastomeren Phasen. Sie weisen bei Raumtemperatur entropieelastische Eigenschaften auf und lassen sich thermisch umformen.

Kautschukmodifizierte Polymere sind mit 5% bis 20% gleichmäßig verteilten Kautschukpartikeln modifiziert. Die Kautschukpartikel sind elastisch, führen zur Erhöhung der Schlagzähigkeit und agieren als Rissstopper, die thermoplastische Polymermatrix lässt sich thermisch umformen.

Silanmodifizierte Thermoplaste/Polymerblends weisen eine schwach vernetzte Molekularstruktur auf, woraus elastisches Verhalten und thermische Umformbarkeit bei höheren Temperaturen resultiert (Temperaturstabilität).
Fig. 1 zeigt schematisch den Aufbau einer Ausführungsform des erfindungsgemäßen Laminats.
Fig. 2 zeigt das erfindungsgemäße Laminat in einer weiteren Ausführungsform.

Die metallische Schicht 1 des Laminats 4 kann erfindungsgemäß eine Folie umfassen. Bevorzugt umfasst die metallische Schicht 1 Aluminium, Titan, Magnesium, Stahl und/oder deren Legierungen. Die Wahl des metallischen Materials erfolgt im Hinblick auf die Verwendung des erfindungsgemäßen Laminats 4. Aluminium, Magnesium und Titan weisen ein geringes Gewicht auf. Daher werden sie insbesondere als Bauteile in der Luftfahrt verwendet. Eine metallische Schicht 1 aus Stahl kann beispielsweise im Automobilbau verwendet werden, da die Kosten von Stahl gegenüber Aluminium oder Titan geringer sind.

Die metallische Schicht 1 weist bevorzugt eine Dicke im Bereich von 100 µm bis 500 µm auf. Mit zunehmender Dicke des Laminats verschlechtern sich dessen Eigenschaften. Die Lebensdauer des erfindungsgemäßen Laminats verringert sich. Von L. B. Vogelsang wird in "Development of a New Hybrid Material (ARALL) for Aircraft Structure" (Ind. Eng. Chem.. Prod. Res. Dev. 1983 (22) 492-296) beschrieben, dass Faser-Metall-Laminate bei geringer Schichtdicke des Metalls ein besseres Ermüdungsverhalten und somit eine längere Lebensdauer aufweisen.

Die untere Grenze von 100 µm ergibt sich durch aus dem Stand der Technik bekannte Herstellungsverfahren. Die Herstellung großflächiger metallischer Schichten 1 mit einer Dicke von weniger als 100 µm ist für die meisten Metalle oder Metalllegierungen sehr aufwendig und teuer. Zwischen zwei metallischen Schichten 1 angeordnet ist eine faserverstärkte Kunststoffschicht 2. Die Kunststoffschicht 2 kann sowohl einen Thermoplasten als auch ein Duromer als Kunststoff umfassen. Es können beliebige Duromere verwendet werden.

Bevorzugt ist der Thermoplast ausgewählt aus Polyetheretherketon (PEEK) und Polyphenylensulfon (PPS). Weitere Thermoplaste sind Polyethylen (PE), Polypropylen (PP), Polyamid (PA) und Polystyrol (PS) und Polyphenylenether-Blends (PPE-Blends).

Nachteilig bei der Verwendung eines Duromers ist, dass die Rohstoffe gekühlt gelagert werden müssen. Bei der Verarbeitung können zudem giftige (Reaktions)Stoffe entstehen. Daher ist die Verwendung eines Thermoplasten in der Kunststoffschicht 2 bevorzugt. Thermoplasten sind recycelbar. Weiterhin ist eine Umformung möglich.

Die Kunststoffschicht 2 weist erfindungsgemäß zur Verstärkung einzelne Fasern und/oder Fasern in Form von orientierten Fasern, Geweben, Gelegen, Gestricken und/oder Gewirken auf. Besonders bevorzugt werden Endlosfasern verwendet. Diese erhöhen die Steifigkeit der Kunststoffschicht 2.

Als Fasern können beliebige Fasern eingesetzt werden. Werden natürliche Fasern beispielsweise aus Baumwolle, Jute oder Flachs in den Kunststoff eingebracht, sind eventuelle Brandschutzrichtlinien bei der Endanwendung des erfindungsgemäßen Laminats 4 zu berücksichtigen.

Bevorzugt werden Kohlenstofffasern, Glasfasern, Aramidfasern, Basaltfasern, Aluminiumoxidfasern, Siliziumcarbid-Fasern oder Asbestfasern oder Mischungen hiervon verwendet. Beim Arbeiten mit Asbestfasern sind gesundheitliche Risiken sowie Umweltschutzbestimmungen zu berücksichtigen.

Die Verstärkungsfasern weisen bevorzugt einen Durchmesser von weniger als 20 µm auf. Kohlenstofffasern haben üblicherweise einen Durchmesser im Bereich von 4 bis 7 µm, während Basaltfasern und Aluminiumoxidfasern einen Durchmesser im Bereich von 10 µm aufweisen. Der Durchmesser von Aramidfasern liegt im Bereich von 12 µm. Glasfasern und Siliziumcarbidfasern weisen üblicherweise einen Durchmesser im Bereich von 8 bis 15 µm auf. Besonders bevorzugt werden Glasfasern und/ oder Kohlenstofffasern verwendet.

Die Dicke der Kunststoffschicht 2 beträgt bevorzugt 100 µm bis 1000 µm. Die untere Grenze der Schichtdicke ergibt sich auch hier aus den Herstellungsmöglichkeiten. Beträgt die Schichtdicke mehr als 1000 µm, ist ein ausgewogenes Verhältnis zwischen Metall und Faserverbundwerkstoff nicht mehr gewährleistet. Bei der Herstellung des Laminats und somit bei der Bestimmung der Dicke der einzelnen Schichten ist auf einen symmetrischen Aufbau bei einem ausgeglichenen Winkelverbund zu achten. Ist dieser symmetrische Aufbau nicht gewährleistet, kommt es zu Spannungen innerhalb des Laminats. Dies führt zu einer verringerten Lebensdauer. Zudem kann sich das Laminat verbiegen.

Die Dicke der Kunststoffschicht 2 ist bevorzugt größer als die Dicke der metallischen Schicht 1, da das Gewicht der Kunststoffschicht 2 geringer ist, als das der metallischen Schicht 1. Das Verhältnis der Volumenanteile der Kunststoffschicht 2 zur metallischen Schicht 1 beträgt bevorzugt 60:40 bei der Verwendung von Leichtmetallen und 80:20 bei Verwendung von Stählen.

Zwischen metallischer Schicht 1 und Kunststoffschicht 2 weist das erfindungsgemäße Laminat eine Grenzflächenschicht 3 auf. Erfindungsgemäß umfasst die Grenzflächenschicht 3 sowohl ein thermoplastisches Elastomer (TPE), einen kautschukmodifizierten Thermoplast oder einen silanmodifizierten Thermoplast/Polymerblend. TPE umfasst erfindungsgemäß auch thermoplastischen Kautschuk (TPK). Bei einem thermoplastischen Kautschuk (TPK) handelt es sich um den unvernetzten Zustand eines thermoplastischen Elastomers (TPE).

Durch das Einbringen der Grenzflächenschicht 3, insbesondere wenn unvernetztes TPK als Grenzflächenschicht 3 eingesetzt wird, in das Faser-Metall-Laminat ist eine geringere Prozesstemperatur bei der Laminatfertigung als bei der Herstellung von konventionellen Faser-Metall-Laminaten notwendig. Dies führt zu einer Reduzierung des Eigenspannungszustandes.

Die elastische Phase innerhalb der Grenzflächenschicht 3 bewirkt einen Ausgleich von Wärmespannungen während des Betriebs. Die Grenzflächenschicht 3 gewährleistet so die thermoplastische Umformbarkeit des erfindungsgemäßen Laminates 4. Zudem dient eine vernetzte Grenzflächenschicht 3 als Barriereschicht, wodurch auch bei Umformvorgängen mit hohen Umformgraden der Kontakt von Fasern der verstärkten Kunststoffschicht 2 und metallischer Schicht 1 vermieden werden kann.

Die Grenzflächenschicht 3 weißt erfindungsgemäß eine gleichmäßige Schichtdicke auf. Sie kann erfindungsgemäß eine Folie umfassen. Bevorzugt liegt die Schichtdicke der Grenzflächenschicht 3 bei 100 µm oder weniger. Liegt die Schichtdicke über 100 µm, so ist eine Reduktion der Biegesteifigkeit die Folge und es kann auch zu einem Versagen des Laminats 4 innerhalb der Grenzflächenschicht 3 kommen.

Als Korrosionsschutz zwischen kohlefaserverstärkten Aluminiumschichten können glasfaserverstärkte Kunststoffe zwischen kohlefaserverstärkten Kunststoff und Aluminium eingebracht werden. Gegenüber solchen glasfaserverstärkten Lagen weist eine erfindungsgemäße Grenzflächenschicht 3 ein deutlich geringeres Zusatzgewicht auf.

Aufgrund geringer mechanischer Schersteifigkeit und innerer Reibung der erfindungsgemäßen Grenzflächenschicht weist der Verbundwerkstoff eine gegenüber Faser-Metall-Laminaten ohne Grenzflächenschicht und insbesondere gegenüber Metallen deutlich höhere mechanische Dämpfung auf. Diese Eigenschaft kann zur Konstruktion schallemissions- und schwingungsarmer flächiger Strukturen, z.B. in Fahrzeugkarosserien genutzt werden.

Die geringe Steifigkeit der Grenzflächenschicht ermöglicht zudem den Abbau von Spannungsspitzen, die im Umfeld von Rissen in einzelnen Lagen der Metallschichten oder faserverstärkten Kunststoffschichten entstehen können. Dadurch wird eine weitere Ausbreitung von Schädigungen deutlich reduziert. Weiterhin führt die nachgiebige Grenzflächenschicht zur Reduktion von Scherspannungsspitzen an den Rändern des Laminats, was wiederum die Gefahr von Delaminationen deutlich reduziert.

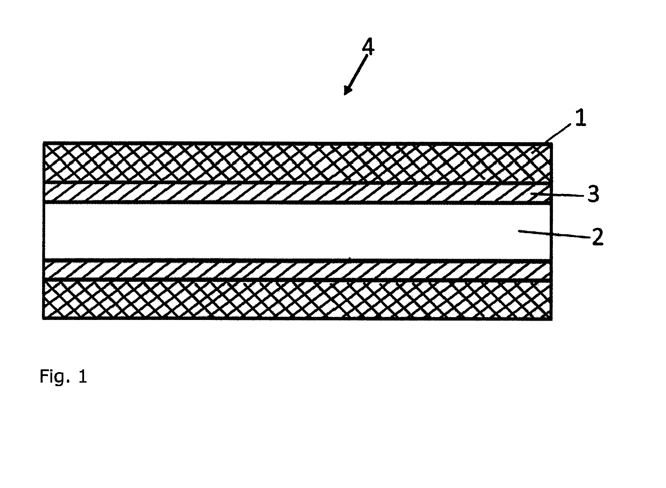

Erfindungsgemäß ist es möglich, dass zwischen Kunststoffschicht 2 und metallischer Schicht 1 mehrere Grenzflächenschichten 3 eingebracht werden. Dabei ist auf einen symmetrischen Aufbau des Laminats zu achten. In der in Fig. 1 gezeigten Ausführungsform weist das erfindungsgemäße Laminat 4 zwei metallische Schichten 1 auf. Hier verläuft die Spiegelachse durch die Kunststoffschicht 2. Nur ein symmetrischer Aufbau bei ausgeglichenem Winkelverbund sorgt jedoch dafür, dass keine oder kaum Spannungen innerhalb des Laminats 4 auftreten. Sollten geringe Spannungen auftreten, so sind diese symmetrisch im Laminat 4 verteilt, dass heißt es kommt nicht zu spannungsbedingten Verformungen innerhalb des Laminats 4.

Die Grenzflächenschicht 3 wird hauptsichtlich unter Berücksichtigung der Matrix der verstärkten Kunststoffschicht 2 gewählt. Die Matrix der Kunststoffschicht 2 und die Grenzflächenschicht 3 sollten eine ähnliche Polarität aufweisen. Hierdurch wird eine feste Verbindung zwischen den einzelnen Schichten des Laminats 4 begünstigt. Weiterhin sollten Kunststoffschicht 2 und Grenzflächenschicht 3 ähnliche Umformtemperatur und Dauergebrauchstemperaturen aufweisen. Hierdurch wird auch eine Langzeitstabilität des Laminats 4 ermöglicht.

Nicht nur die Kunststoffschicht 2 sondern auch die metallische Schicht 1 sind bei der Auswahl der Grenzflächenschicht 3 zu berücksichtigen. Die Benetzung beziehungsweise Haftung der Grenzflächenschicht 3 an der metallischen Schicht muss sichergestellt werden.

Geeignete TPK/TPE für die Grenzflächenschicht 3 umfassen beispielsweise Blockcopolymere, wie zum Beispiel thermoplastische Polyurethanelastomere (TPE-U), thermoplastische Polyesterelastomere (TPE-E), thermoplastische Polyether- Polyamid- Elastomere (TPE-A). Weiterhin können Polymerblends, wie beispielsweise unvernetzte Blends mit Polyolefin (TPE-O) oder Polymerlegierung, wie beispielsweise vernetzte Elastomer-Thermoplast-Legierungen (TPE-V) eingesetzt werden.

Geeignete kautschukmodifizierte Thermoplaste umfassen kautschukmodifiziertes Polystyrol (PS), Polyamid (PA), Polyethylen (PE), Polypropylen (PP), Polyetheretherketone (PEEK), Polyphenylensulfon (PPS) und Polyphenylenether-Blends (PPE-Blends) sowie Mischungen der genannten Polymere. Geeignete Thermoplaste/Polymerblends wie oben definiert können auch Silan-modifiziert sein.

Erfindungsgemäß kann die Grenzflächenschicht 3 als Gießbeziehungsweise Extrudierfolie vorliegen. Es ist auch möglich, dass die metallische Schicht bereits mit der Grenzflächenschicht 3 beschichtet ist oder die Grenzflächenschicht 3 als Paste vorliegt.

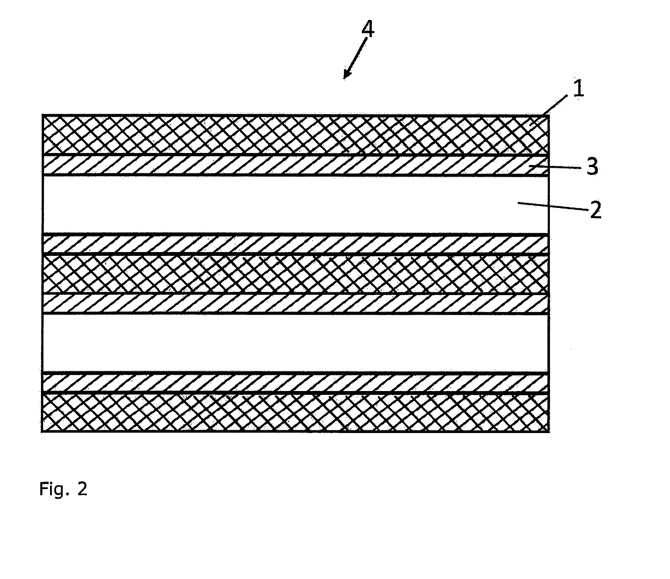

Im Laminat 4 kann sich die Schichtenfolge erfindungsgemäß periodisch wiederholen. Fig. 2 zeigt ein Laminat 4, welches drei metallische Schichten 1 und zwei Kunststoffschichten 2 aufweist. Zwischen Kunststoffschicht 2 und metallischer Schicht 1 befindet sich eine Grenzflächenschicht 3. Auch ein solches Mehrfachlaminat 4 ist symmetrisch aufgebaut.

In einer weiteren Ausführungsform wird die der vorliegenden Erfindung zugrundeliegende Aufgabe gelöst durch ein Verfahren zur Herstellung eines Laminats 4, welches die folgenden Schritte umfasst:
a. Einbringen der Grenzflächenschicht 3 zusammen mit der metallischen Schicht 1 und der verstärkten Kunststoffschicht 2 in ein Werkzeug,
b. Gegebenenfalls wiederholen des Schritts a.,
c. Schließen des Werkzeugs und unter Druck Aufheizen des Laminats auf die Konsolidierungstemperatur der Kunststoffschicht 2.
Beim aktiven oder passiven Abkühlen gehen die einzelnen Schichten eine stabile Verbindung miteinander ein.

In einem alternativen Verfahren kann ein erfindungsgemäßes Laminat durch ein Verfahren hergestellt werden, welches die folgenden Schritte umfasst:
a. Auftragen der Grenzflächenschicht 3 auf die metallische Schicht 1,
b. Einlegen der so behandelten metallischen Schicht 1 in ein Werkzeug, und zwar derart, dass die Grenzflächenschicht 3 nach oben zeigt,
c. Auflegen der verstärkten Kunststoffschicht 2 auf die Grenzflächenschicht 3,
d. Auflegen einer weiteren metallischen Schicht 1, welche mit einer Grenzflächenschicht 3 versehen wurde, wobei die Grenzflächenschicht 3 auf der verstärkten Kunststoffschicht 2 aufliegt,
e. Schließen des Werkzeugs und unter Druck aufheizen des Laminats 4 auf die Konsolidierungstemperatur der verstärkten Kunststoffschicht 2. Dabei ist es auch in diesem Verfahren möglich, dass weitere metallische Schichten 1, Grenzflächenschichten 3 und Kunststoffschichten 2 eingebracht werden. Im Anschluss an Schritt d. kann beispielsweise auf die nun oben aufliegende metallische Schicht 1 eine weitere Grenzflächenschicht 3 aufgetragen werden. Hieran schließen sich die Schritte b. bis d. an.

Wird ein thermoplastischer Kautschuk als Grenzflächenschicht 3 eingesetzt, so ist eine Verbundherstellung ohne Aufschmelzen der Kunststoffschicht 2 möglich. Dies ermöglicht die Oberflächenbehandlung von Thermoplasten zur Erzeugung funktioneller Gruppen. Hierdurch wird eine verbesserte Grenzflächenhaftung ermöglicht. Eine geeignete Oberflächenbehandlung ist beispielsweise das Corona-Verfahren, welches auch in eine Serienproduktion integriert werden kann.

Ein erfindungsgemäßes Laminat 4 kann auf Grund seines geringen Gewichts und seiner physikalischen Eigenschaften als Struktur- und/oder Leichtbauwerkstoff in der Luftfahrt, im Schienenverkehr und/ oder Automobilbau verwendet werden.

## Patentansprüche

1. Laminat (4) umfassend wenigstens eine zwischen mindestens zwei metallischen Schichten (1) angeordnete faserverstärkte Kunststoffschicht (2) und wenigstens eine zwischen der metallischen Schicht (1) und der Kunststoffschicht (2) angeordneten Grenzflächenschicht (3) aus mehrphasigen Polymerblends oder silanmodifizierten Thermoplast/Polymerblends.

2. Laminat (4) nach Anspruch 1, **dadurch gekennzeichnet, dass** die metallische Schicht (1) eine metallische Folie umfasst.

3. Laminat (4) nach Anspruch 1 oder 2, **dadurch gekennzeichnet, dass** die metallische Schicht (1) Aluminium, Titan, Magnesium, Stahl und/oder deren Legierungen umfasst.

4. Laminat (4) nach einem der Ansprüche 1 bis 3, **dadurch gekennzeichnet, dass** die metallische Schicht (1) eine Dicke im Bereich von 100 µm bis 500 µm aufweist.

5. Laminat (4) nach einem der Ansprüche 1 bis 4, **dadurch gekennzeichnet, dass** die verstärkte Kunststoffschicht (2) einen Thermoplasten oder ein Duromer als Kunststoff umfasst.

6. Laminat (4) nach einem der Ansprüche 1 bis 5, **dadurch gekennzeichnet, dass** die faserverstärkte Kunststoffschicht (2) zur Verstärkung einzelne Fasern und/oder Fasern in Form von Geweben, Gelegen, Gestricken und/oder Gewirken aufweist.

7. Laminat (4) nach Anspruch 6, **dadurch gekennzeichnet, dass** die Fasern ausgewählt sind aus Kohlenstoff-Fasern, Glasfasern, Aramidfasern, Basaltfasern, Aluminiumoxidfasern, Siliziumcarbid-Fasern und/oder Asbestfasern.

8. Laminat (4) nach einem der Ansprüche 1 bis 7, **dadurch gekennzeichnet, dass** die Schichtdicke der Kunststoffschicht (2) 100 µm bis 1000 µm beträgt.

9. Laminat (4) nach einem der Ansprüche 1 bis 8, **dadurch gekennzeichnet, dass** die Grenzflächenschicht (3) eine Schichtdicke von 100 µm oder weniger aufweist.

10. Laminat (4) nach einem der Ansprüche 1 bis 9, **dadurch gekennzeichnet, dass** sich die Schichtenfolge periodisch wiederholt.

11. Verfahren zur Herstellung eines Laminats (4) gemäß einem der Ansprüche 1 bis 10 umfassend die folgenden Schritte:
a. Einbringen der Grenzflächenschicht (3) zwischen metallische Schicht (1) und verstärkte Kunststoffschicht (2) in ein Werkzeug,
b. gegebenenfalls wiederholen des Schritts a,
c. Schließen des Werkzeugs und Aufheizen des Laminats (4) unter Druck auf die Konsolidierungstemperatur der Kunststoffschicht (2).

12. Verfahren zu Herstellung eines Laminats (4) gemäß einem der Ansprüche 1 bis 10 umfassend die folgenden Schritte:
a. Auftragen der Grenzflächenschicht (3) auf die metallische Schicht (1),
b. Einlegen der so behandelten metallischen Schicht (1) in ein Werkzeug, derart, dass die Grenzflächenschicht (3) nach oben zeigt,
c. Auflegen der Kunststoffschicht (2) auf die Grenzflächenschicht (3),
d. Auflegen einer weiteren metallischen Schicht (1), welche mit einer Grenzflächenschicht (3) versehen wurde, wobei die Grenzflächenschicht (3) auf der verstärkten Kunststoffschicht (2) aufliegt,
e. Schließen des Werkzeugs und unter Druck Aufheizen des Laminats (4) auf die Konsolidierungstemperatur der verstärkten Kunststoffschicht (2).

13. Verwendung eines erfindungsgemäßen Laminats (4) nach einem der Ansprüche 1 bis 10 als Struktur- und Leichtbauwerkstoff in der Luftfahrt, im Schienenverkehr und im Automobilbau.
